# EUROPEAN PATENT SPECIFICATION

(11) **EP 2 705 708 B1**
(45) Date of publication and mention of the grant of the patent: **06.04.2016**
(21) Application number: 11718363.2
(22) Date of filing: 05.05.2011
(51) Int. Cl.: H04W 68/12

(54) **METHOD AND APPARATUS FOR HANDLING REQUESTS FOR LOCATION OF A SUBSCRIBER**
VERFAHREN UND VORRICHTUNG ZUR HANDHABUNG VON ANFRAGEN EINES TEILNEHMERAUFENTHALTSORTES
PROCÉDÉ ET APPAREIL PERMETTANT DE TRAITER DES REQUÊTES DE LOCALISATION D'UN ABONNÉ

(43) Date of publication of application: 12.03.2014
(73) Proprietor: Nokia Solutions and Networks Oy, 02610 Espoo (FI)
(72) Inventor: JANOSI, Laszlo, H-1048 Budapest (HU); KALLIO, Juha Matias, FI-01610 Vantaa (FI)
(74) Representative: Borgström, Markus
(86) International application number: PCT/EP2011/057172
(87) International publication number: WO 2012/149975

(56) References cited:
- WO-A1-2011/136921
- US-A1- 2007 270 127
- "Universal Mobile Telecommunications System (UMTS); LTE; Mobility Management Entity (MME) Visitor Location Register (VLR) SGs interface specification (3GPP TS 29.118 version 10.3.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP CT 1, no. V10.3.0, 1 April 2011 (2011-04-01), XP014065064,

## Description

### TECHNICAL FIELD OF THE INVENTION

The present invention relates to handling requests for location of a subscriber. More specifically, the present invention relates to a method and an apparatus for handling requests for location of a subscriber.

### BACKGROUND

Communication networks such as Global System for Mobile Communications (GSM) and Universal Mobile Terrestrial System (UMTS) provide services to subscribers regardless of their location. In these networks, the location of a subscriber may be stored in registers such as a home location register (HLR) and a visitor location register (VLR). The HLR may store subscriber parameters permanently and the current location of a subscriber, whereas the VLR may store all relevant data concerning a subscriber only as long as the subscriber is within the area controlled by that visitor location register. The HLR may request information about the current location of a subscriber from a VLR, where the subscriber may be located, using a Provide Subscriber Information (PSI) message flow defined by the 3rd Generation Partnership Project (3GPP). Such procedures may be required for Customized Applications for Mobile network Enhanced Logic (CAMEL) feature defined by 3GPP or for optimal routing. The PSI messages may utilize mobile application part (MAP) protocol, as defined by the 3GPP.

When a subscriber is located in an area controlled by a VLR, the VLR can provide a response to the MAP-PSI message with the location information. However, if the subscriber is located in an area not controlled by the VLR, the VLR may not provide any response to the MAP-PSI message and thus HLR may not be able to obtain the location information of the subscriber.

Further, a subscriber may be attached to an IP based network such as an Evolved Packet System (EPS) comprising an Evolved Universal Terrestrial Radio Access Network (E-UTRAN), but also registered to a Circuit Switched (CS) system such as the GSM or UMTS network. In such scenario, procedures for handling of requests for location of a subscriber in a CS network, such as the MAP-PSI request, are not known. Thus, a MAP-PSI request from HLR may be rejected.

CS Fallback in the Evolved Packet System (EPS) enables the provisioning of CS-domain services (e.g. voice call. Location Services (LCS) or supplementary services) by reuse of CS infrastructure when the UE is served by E-UTRAN. Additionally. SMS delivery via the CS core network is realized without CS fallback.

"Universal Mobile Telecommunications System (UMTS); LTE; Mobility Management Entity (MME) Visitor Location Register (VLR) SGs interface specification (3GPP TS 29.118 version 10.3.0 Release 10)" specifies the procedures and the SGs Application Part (SGsAP) messages used on the SGs interface between the Mobility Management Entity (MME) in the EPS and the Visitor Location Register (VLR), to allow location management coordination and to relay certain messages related to GSM circuit switched services over the EPS system. The present document also specifies the use of Stream Control Transmission Protocol (SCTP) for the transport of SGsAP messages.

The above-mentioned document is applicable to the MME in the EPS and to the VLR. The functional split between the MME and the VLR is defined in 3GPP TS 23.272.

### SUMMARY

In consideration of the above, it is an object of examples of the present invention to overcome one or more of the above drawbacks. In particular, the present invention provides methods, apparatuses, a system, and a related computer program product for handling requests for location of a subscriber.

According to a first example of the invention, there is provided an apparatus that may comprise: means for receiving a first request to page a subscriber attached to a first network; means for transmitting a paging request to the subscriber via a control node in the first network; means for receiving a response to the paging request from the subscriber subsequent to the subscriber attaching to a second network; and means for transmitting a response to the first request. The response to the first request may comprise a location of the subscriber in the second network. Alternatively, the response to the first request may comprise a request to update a location of the subscriber in the second network.

The first network may comprise an enhanced universal terrestrial radio access network (E-UTRAN) and the second network may comprise a circuit switched (CS) network. Further, the circuit switched network may comprise any of:
- a Global System for Mobile Communications (GSM) Enhanced Data rates for Global Evolution (EDGE) Radio Access Network (GERAN); and
- a Universal Terrestrial Radio Access Network (UTRAN).

The control node in the first network may comprise a mobility management entity.

The apparatus of the first example may comprise a mobile switching centre.

According to a second example of the invention, there is provided an apparatus that may comprise: means for receiving a first request for a location of a subscriber in a first network, wherein the subscriber may be attached to a second network; means for transmitting a second request to page the subscriber; means for receiving a response to the second request comprising the location of the subscriber in the first network; and means for transmitting a response for the first request comprising the location of the subscriber in the first network.

Here the first network may comprise a circuit switched (CS) network and the second network may comprise an enhanced universal terrestrial radio access network (E-UTRAN). Further, the circuit switched network comprises any of:
- a Global System for Mobile Communications (GSM) Enhanced Data rates for Global Evolution (EDGE) Radio Access Network (GERAN); and
- a Universal Terrestrial Radio Access Network (UTRAN).

The first request may comprise a mobile application part (MAP)-ProvideSubscriberInfo (PSI) message.

The apparatus of the second example may comprise a visitor location register.

According to a third example of the invention, there is provided an apparatus that may comprise: means for transmitting a first request for a location of a subscriber to a first visitor location register; means for receiving a second request to update a record of the subscriber from a second visitor location register, wherein the update of record may relate to associating the subscriber with the second visitor location register; means for receiving a error response for the first request from the first visitor location register; and means for retransmitting the first request for the location of the subscriber to the second visitor location register.

The first request for the location of the subscriber may comprise a mobile application part (MAP)-ProvideSubscriberInfo (PSI) message. The second request may comprise a mobile application part (MAP)- Update Location Request message.

The apparatus of the third example may further comprise: means for transmitting a third request to the first visitor location register, wherein the third request may comprise an indication that the subscriber is not controlled by the first visitor location register. The third request may comprise a mobile application part (MAP) - Cancel Location Request.

The apparatus of the third example may further comprise means for receiving a response for the retransmitted first request from the second visitor location register. The response for the retransmitted first request may comprise the location of the subscriber.

The location of the subscriber may comprise a location of the subscriber in a first network; and the subscriber may be attached to a second network.

The first network may comprise a circuit switched (CS) network and the second network may comprise an enhanced universal terrestrial radio access network (E-UTRAN). Further, the circuit switched network may comprise any of:
- a Global System for Mobile Communications (GSM) Enhanced Data rates for Global Evolution (EDGE) Radio Access Network (GERAN); and
- a Universal Terrestrial Radio Access Network (UTRAN). The apparatus of third example may comprise any of a home location register and a home subscriber server.

According to a fourth example of the invention, there is provided an apparatus that may comprise: means for receiving a first request for a location of a subscriber from a home location register; means for receiving a second request for an identification of the subscriber from a visitor location register; and means for forwarding the first request for the location of the subscriber to the visitor location register.

The apparatus of the fourth example may further comprise means for transmitting a request to page the subscriber.

The first request for the location of the subscriber may comprise a mobile application part (MAP)-ProvideSubscriberInfo (PSI) message.

The apparatus of fourth example may further comprise means for receiving a response for the forwarded first request. The response for the forwarded first request may comprise the location of the subscriber.

The apparatus of fourth example may further comprise means for transmitting a response to the first request, wherein the response may comprise the location of the subscriber. The location of the subscriber may comprise a location of the subscriber in a first network; and the subscriber may be attached to a second network.

The first network may comprise a circuit switched (CS) network and the second network comprises an enhanced universal terrestrial radio access network (E-UTRAN). Further, the circuit switched network may comprise any of:
- a Global System for Mobile Communications (GSM) Enhanced Data rates for Global Evolution (EDGE) Radio Access Network (GERAN); and
- a Universal Terrestrial Radio Access Network (UTRAN). The apparatus of fourth example may comprise a visitor location register.

According to a fifth example of the invention, there is provided an apparatus that may comprise: means for receiving a first request for a location of a subscriber from a home location register; means for receiving a message from the home location register that may comprise an indication that the subscriber is not controlled by the apparatus; means for transmitting a second request for the location of the subscriber to the home location register; and means for receiving a response for the second request from the home location register.

The apparatus of fifth example may further comprise means for transmitting a request to page the subscriber.

The first request for the location of the subscriber may comprise a mobile application part (MAP)-ProvideSubscriberInfo (PSI) message. The message comprising an indication that the subscriber is not controlled by the apparatus may comprise a mobile application part (MAP) Cancel Location request. The second request for the location of the subscriber may comprise a mobile application part (MAP)-AnyTimeInterrogation (ATI) message. The response to the second request may comprise the location of the subscriber.

The apparatus of fifth example may further comprise means for transmitting a response to the first request, wherein the response may comprise the location of the subscriber. The location of the subscriber may comprise a location of the subscriber in a first network and the subscriber may be attached to a second network, wherein the first network may comprise a circuit switched (CS) network and the second network may comprise an enhanced universal terrestrial radio access network (E-UTRAN). The circuit switched network may comprise any of:
- a Global System for Mobile Communications (GSM) Enhanced Data rates for Global Evolution (EDGE) Radio Access Network (GERAN); and
- a Universal Terrestrial Radio Access Network (UTRAN).

The apparatus of fifth example may comprise a visitor location register.

According to a sixth example of the invention, there is provided a method that may comprise: receiving a first request for a location of a subscriber in a first network, wherein the subscriber may be attached to a second network; transmitting a second request to page the subscriber; receiving a response to the second request that may comprise the location of the subscriber in the first network; and transmitting a response for the first request that may comprise the location of the subscriber in the first network.

The first request may comprise a mobile application part (MAP)-ProvideSubscriberInfo (PSI) message.

The method of sixth example may further comprise: transmitting a paging request to the subscriber via a control node in the second network; and receiving a response to the paging request from the subscriber subsequent to the subscriber attaching to a first network. The first network may comprise a circuit switched (CS) network and the second network may comprise an enhanced universal terrestrial radio access network (E-UTRAN). The circuit switched network may comprise any of:
- a Global System for Mobile Communications (GSM) Enhanced Data rates for Global Evolution (EDGE) Radio Access Network (GERAN); and
- a Universal Terrestrial Radio Access Network (UTRAN).

The control node may comprise a mobility management entity.

According to a seventh example of the invention, there is provided a method that may comprise: transmitting a first request for a location of a subscriber to a first visitor location register; receiving a second request to update a record of the subscriber from a second visitor location register, wherein the update of record may relate to associating the subscriber with the second visitor location register; receiving a error response for the first request from the first visitor location register; and retransmitting the first request for the location of the subscriber to the second visitor location register. The first request for the location of the subscriber may comprise a mobile application part (MAP)- ProvideSubscriberInfo (PSI) message. The second request comprises a mobile application part (MAP)- Update Location Request message.

The method of seventh example may further comprise transmitting a third request to the first visitor location register, wherein the third request may comprise an indication that the subscriber is not controlled by the first visitor location register. The third request may comprise a mobile application part (MAP) - Cancel Location Request.

The method of seventh example may further comprise receiving a response for the retransmitted first request from the second visitor location register, wherein the response for the retransmitted first request may comprise the location of the subscriber. The location of the subscriber may comprise a location of the subscriber in a first network and the subscriber may be attached to a second network. The first network may comprise a circuit switched (CS) network and the second network may comprise an enhanced universal terrestrial radio access network (E-UTRAN). The circuit switched network may comprise any of:
- a Global System for Mobile Communications (GSM) Enhanced Data rates for Global Evolution (EDGE) Radio Access Network (GERAN); and
- a Universal Terrestrial Radio Access Network (UTRAN).

The method of seventh example may further comprise paging the subscriber, wherein paging the subscriber may comprise paging via a control node in the second network.

According to an eighth example of the invention, there is provided a method that may comprise: receiving a first request for a location of a subscriber from a home location register; receiving a second request for an identification of the subscriber from a visitor location register; and forwarding the first request for the location of the subscriber to the visitor location register. The method may further comprise transmitting a request to page the subscriber. The first request for the location of the subscriber may comprise a mobile application part (MAP)- ProvideSubscriberInfo (PSI) message. The method may further comprise receiving a response for the forwarded first request, wherein the response may comprise the location of the subscriber. The method may further comprise transmitting a response to the first request, wherein the response may comprise the location of the subscriber, wherein the location of the subscriber may comprise a location of the subscriber in a first network and the subscriber may be attached to a second network. The first network may comprise a circuit switched (CS) network and the second network may comprise an enhanced universal terrestrial radio access network (E-UTRAN). Further, the circuit switched network may comprise any of:
- a Global System for Mobile Communications (GSM) Enhanced Data rates for Global Evolution (EDGE) Radio Access Network (GERAN); and
- a Universal Terrestrial Radio Access Network (UTRAN).

According to a ninth example of the invention, there is provided a method that may comprise: receiving at a visitor location register a first message requesting a location information of a subscriber; receiving at the visitor location register a second message that may comprise an indication that the subscriber is not controlled by the visitor location register; transmitting by the visitor location register a third message requesting the location information of the subscriber to a home location register; and receiving a response to the third message from the home location register. The method may further comprise transmitting a request to page the subscriber.

The first message may comprise a mobile application part (MAP)-ProvideSubscriberInfo (PSI) message. The second message may comprise a mobile application part (MAP) Cancel Location request. The third message may comprise a mobile application part (MAP)- AnyTimeInterrogation (ATI) message. The response to the third message may comprise the location of the subscriber.

The method may further comprise transmitting a response to the first message, wherein the response may comprise the location of the subscriber, wherein the location of the subscriber may comprise a location of the subscriber in a first network and the subscriber may be attached to a second network.

The first network may comprise a circuit switched (CS) network and the second network may comprise an enhanced universal terrestrial radio access network (E-UTRAN). Further, the circuit switched network may comprise any of:
- a Global System for Mobile Communications (GSM) Enhanced Data rates for Global Evolution (EDGE) Radio Access Network (GERAN); and
- a Universal Terrestrial Radio Access Network (UTRAN).

According to a tenth example of the invention, there is provided a system that may comprise: first apparatus that may comprise an apparatus of the third example; second apparatus that may comprise an apparatus of any of second, fourth and fifth examples; and third apparatus that may comprise an apparatus of first example.

According to a eleventh example of the invention, there is provided computer program product code means that may perform method steps according to any of sixth, seventh, eighth and ninth examples, when run on a processing means or module.

Examples of the present invention may have one or more of following advantages:
- requests for location of a subscriber, e.g., a MAP-PSI request, can be handled even if the subscriber is located in an area not controlled by a visitor location register; and
- requests for location of a subscriber in a CS network, e.g., a MAP-PSI request, can be handled even if the subscriber is attached to an IP based network.

### BRIEF DESCRIPTION OF THE DRAWINGS

Figure 1 shows a network architecture, according to an example of the present invention, for handling requests for location of a subscriber;
Figure 2 shows tracking areas in a IP based network and location areas in a CS network, according to an examples of the present invention, and a mapping of the tracking areas and location areas stored by a mobility management entity;
Figure 3 shows procedures, according to an example of the present invention, for handling requests for location of a subscriber in a CS network, wherein the subscriber may be attached to a IP based network;
Figures 4a and 4b show procedures, according to an example of the present invention, for handling requests for location of a subscriber in a CS network;
Figures 5a and 5b show procedures, according to another example of the present invention, for handling requests for location of a subscriber in a CS network;
Figures 6a and 6b show procedures, according to yet another example of the present invention, for handling requests for location of a subscriber in a CS network;
Figure 7 shows a system and apparatuses, according to examples of the present invention, for handling requests for location of a subscriber.

### DETAILED DESCRIPTION OF THE PRESENT INVENTION

Examples of the present invention are described herein below by way of example with reference to the accompanying drawings.

Communication networks may be pure circuit switched (CS) networks or internet protocol (IP) based networks. One example for the IP based networks is the Evolved Packet System (EPS) that supports an Evolved Universal Terrestrial Radio Access Network (E-UTRAN), also known as Long Term Evolution (LTE), as a new radio access technology. The core network of EPS, referred to as the evolved packet core (EPC) can also be used in conjunction with other circuit switched (CS) networks such as the GERAN (Global System for Mobile Communications (GSM) Enhanced Data rates for Global Evolution (EDGE) Radio Access Network) and the UTRAN.

A subscriber can be either camped on E-UTRAN or UTRAN or GERAN, but may not be on any two accesses simultaneously. That is, when the subscriber is camped on E-UTRAN, it may not be reachable over UTRAN or GERAN.

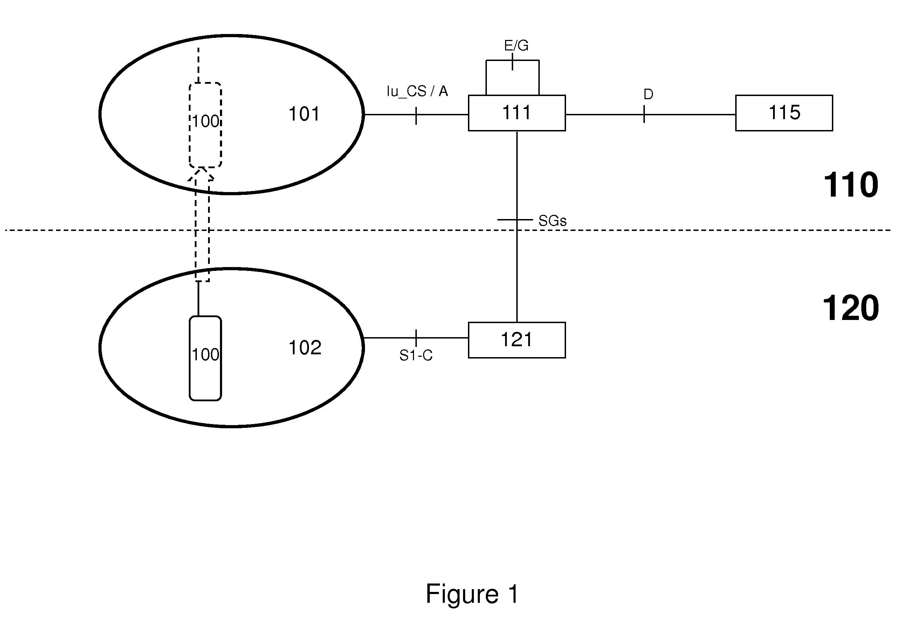

Figure 1 shows an architecture wherein procedures, according to examples of the present invention, for handling requests for location information of subscribers may be performed. Only functional entities necessary for understanding the invention are shown in the figure.

A subscriber may use an user equipment (UE) 100 to connect to a CS network 110 through a GERAN or UTRAN access network 101. A GERAN access network 101 may connect to a CS core network for establishing sessions for the user 100. The CS core network may comprise a mobile switching center server (MSS) and/or a visitor location register (VLR) 111, connected to the GERAN network 101 over an A interface defined by 3GPP. Similarly, an UTRAN access network 101 may connect to a core network for establishing sessions for the user 100. The CS core network may comprise a mobile switching center server (MSS) and/or a visitor location register (VLR) 111, connected to the UTRAN network 101 over an Iu_CS interface defined by 3GPP. The VLR may be a functional part of the MSS or alternatively, may be a separate entity. If VLR is a separate entity, it may communicate over a B interface with MSS. There may be a plurality of MSS's 111 in the network which may be interconnected over an E interface. Similarly, there may be a plurality of VLRs 111 that may be interconnected over a G interface.

The CS core network may also comprise a subscriber repository such as a home location register (HLR) or a home subscriber server (HSS) 115. The reference point between an HLR or HSS and the MSS/VLR 111 may be the D interface as defined by 3GPP.

As shown in the figure, the user equipment (UE) 100 may be capable of connecting to both a CS network 110 and an evolved packet system (EPS) network 120, but may be attached to only one network at a time. The UE 100 may connect to the EPS network 120 through an E-UTRAN access network 102. An E-UTRAN access network 102 may connect to an evolved packet core (EPC) network for establishing sessions for the user 100. The EPC network may comprise a mobility management entity (MME) 121, connected to the E-UTRAN network 102 over a S1-C interface defined by 3GPP. In order to make CS services such as voice call and short messaging service (SMS) available for subscribers camped on E-UTRAN, a Circuit Switched (CS) Fallback (CSFB) procedure has been standardised by the 3GPP. For this purpose, 3GPP has defined a SGs interface between the MME 121 of the EPC and MSS/VLR 111 in the CS core network, through which an user can register in both the CS network and EPS network and CSFB can be performed.

When an user equipment (UE) 100 registers in an evolved packet system (EPS) 120, it can indicate its CSFB capability in the registration request. If EPS 120 supports CSFB, a mobility management entity (MME) 121 may perform location update on a SGs interface on behalf of the UE 100 to the MSS/VLR 111 in a CS network 110. Thus the UE 100 will be registered into both the EPS 120 and CS 110 networks.

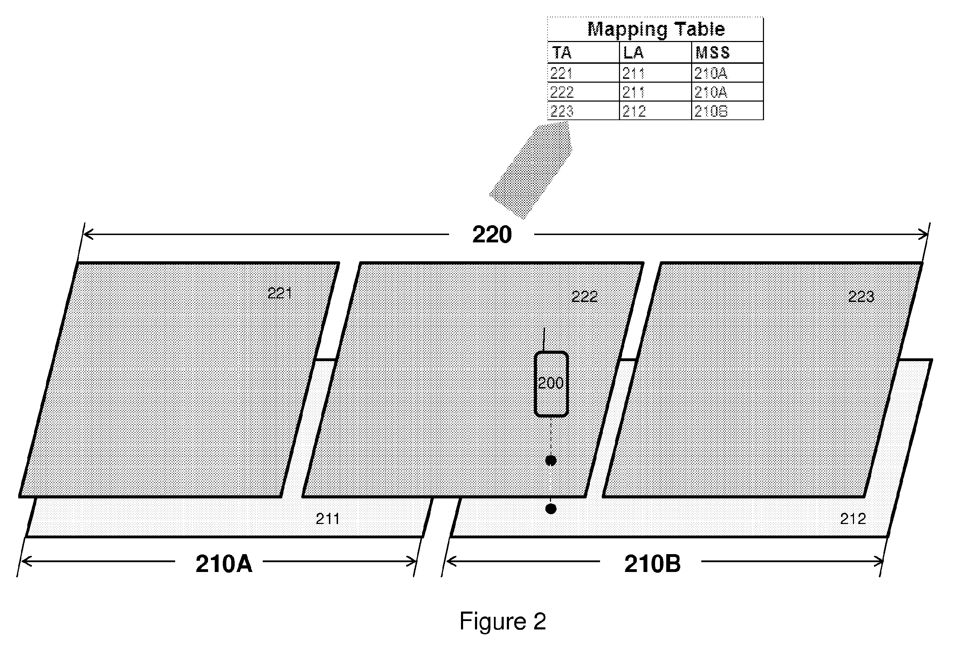

For choosing the MSS/VLR 111 for performing location update, MME 121 may use a mapping between Tracking Areas (TA) in E-UTRAN 102 and Location Areas (LA) in GERAN/UTRAN 101. As shown in figure 2, cells of a E-UTRAN are grouped into Tracking Areas (TA) 221, 222, 223 and cells in GERAN/UTRAN are grouped into Location Areas (LA) 211 and 212. A tracking area, e.g., 221, 222 or 223 may be controlled by one or more MME 220. Similarly, a location area, e.g, 211 oe 212 may be controlled by one or more MSS/VLR 210A or 210B. The MME 220 stores a mapping between the tracking areas and location areas. Thus, when performing a location update over SGs interface towards MSS/VLR 210A or 210B, the MME 220 may use the mapping to determine the location area of the UE and choose the MSS/VLR 210A or 210B controlling the location area. Thus, any request for a CS voice call may be routed through the MSS/VLR using CS Fallback procedures.

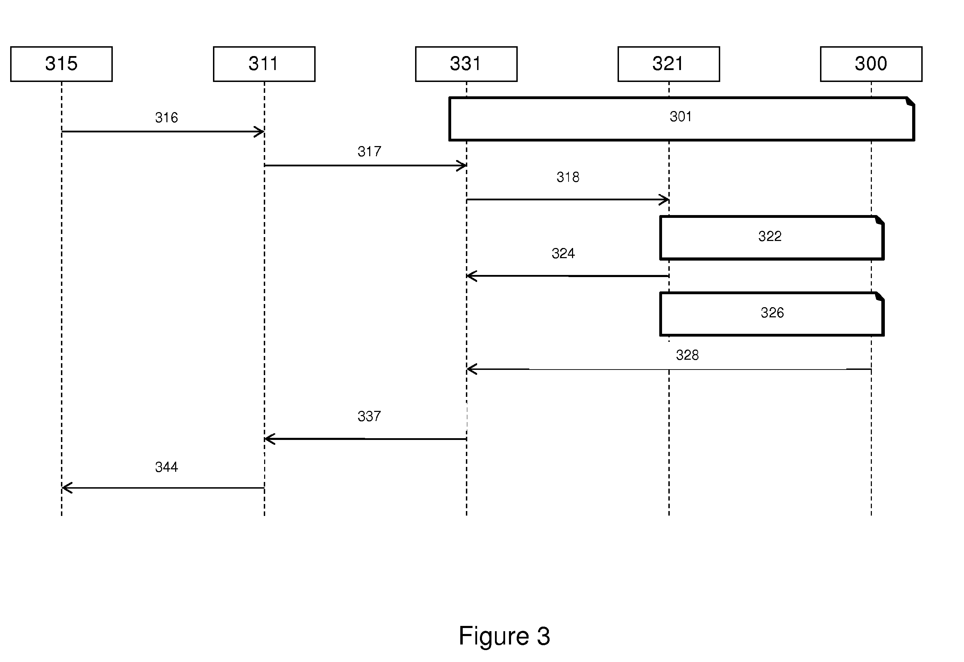

Figure 3 shows procedures, according to examples of the present invention, for handling mobile terminated (MT) CS signaling messages in a CSFB scenario. Examples of MT CS signaling messages may be mobile application part (MAP) Provide-Subscriber-Info (PSI) message defined by 3GPP. As shown in figure 3, a MAP-PSI message 316 may be transmitted by a home location register (HLR) or a home subscriber server (HSS) 315, to a visitor location register (VLR) 311. As noted earlier, VLR 311 may be a function co-located in a mobile switching center server (MSS) 331 or a separate entity. The MAP-PSI message 316, according to examples of present invention, may be a request for an information of a subscriber in the CS network, e.g., location of the subscriber in CS network.

An user equipment 300 of the subscriber, according to examples of the present invention, may be registered 301 with a E-UTRAN network as well as with the CS network, as described above. Such user equipment 300 may be capable of CSFB procedures when attached to an E-UTRAN network.

When a MAP-PSI message 316 is received by VLR 311, the VLR 311 may transmit a request 317 to MSS 331 over a B interface to page the user equipment 300. It may be noted that if VLR 311 is co-located with MSS 331, the request 317 to page the user equipment 300 may be an internal communication. If the UE 300 is attached to the CS network, MSS 331 will page the UE 300 to retrieve the required information. Since the UE 300 may be attached to a E-UTRAN network, MSS 331 may page the user equipment 300 via a mobility management entity (MME) 321. For this, MSS 331 may send a paging request 318 to a mobility management entity (MME) 321 over SGs interface.

The MME 321 may in turn perform a paging 322 towards UE 300 if the UE is idle. Alternatively, if UE 300 is in an active session in EPS network, MME 321 may perform a notification 322 of a CS signaling message. The MME 321 may receive a service request from UE 300 as part of the paging or notification procedure 322. Subsequently, the MME 321 may send a service request 324 to MSS 331, indicating that the UE 300 is found. Further, MME 321 may initiate a CS Fallback procedure 326 towards the UE 300.

Subsequent to the CS fall back (CSFB) 326, UE 300 may send a paging response 328 to MSS 331. If the UE 300 is located in a current location area different from a location area previously updated during a location update procedure, the paging 328 may comprise a location area update request. The MSS 331 may transmit a message 337, as response to the request to page message 317, to VLR 311. The response 337 may comprise the location of the UE 300 in the CS network. Subsequent to this, VLR 311 may transmit a MAP-PSI response message 344, as response for the MAP-PSI request message 316, to HLR 315. Such response message 344 may comprise location of the UE 300 in the CS network.

The above described procedure may fail if the UE 300 is located in a location area not controlled by the VLR 311/MSS 331. Such a situation may arise:
- if the UE 300 has moved to a location area controlled by a VLR/MSS other than the VLR 311/MSS 331 and the location update procedures were not performed by the UE 300; or
- if boundaries of Tracking Areas (in E-UTRAN) and Location Areas (in a CS network such as UTRAN/GERAN) are not aligned. For example, referring to figure 2, an UE 200 may be located in a tracking area 222. An MME 220 may, based on the mapping table wherein tracking area 222 is mapped to 211 because of a partial overlap, perform location update over an SGs interface towards a VLR/MSS 210A. However, the UE 200 may be located in location area 212 which is controlled by VLR/MSS 210B. Thus, VLR/MSS 210A may receive a MAP-PSI message from a HLR, but after CSFB, UE 200 may send a location update request to VLR/MSS 210B. Thus, VLR/MSS 210A will not be able to perform the required procedure to retrieve information about the subscriber and an error response may be sent to the HLR.

Examples of procedures according to the present invention, by which requests for location of a subscriber in a CS network may be handled in the situations described above, are described below with reference to the figures.

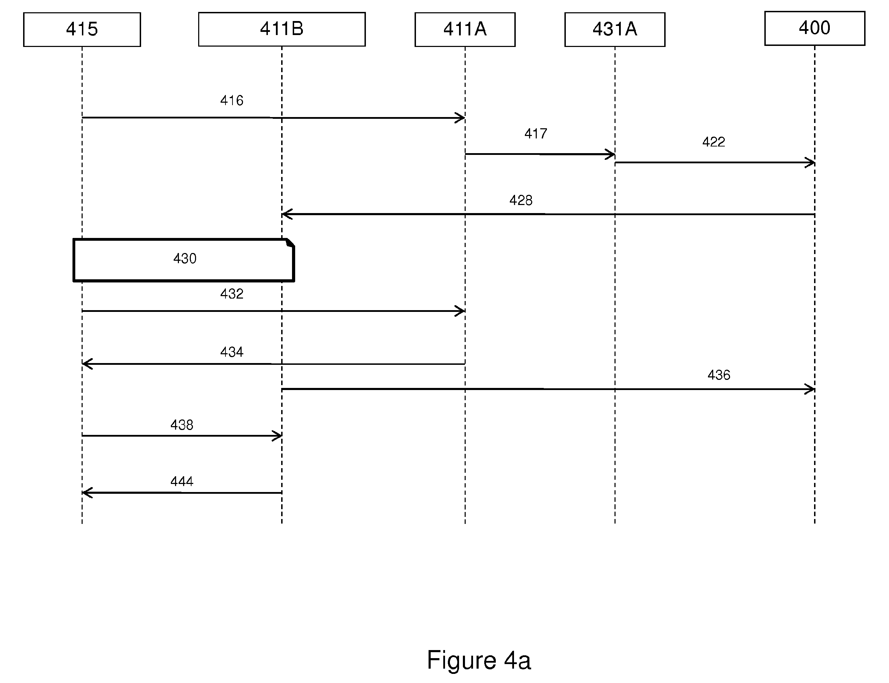

Figure 4a illustrates an example, according to the present invention, of a procedure to handle requests for location of a subscriber. A MAP-PSI message 416 may be transmitted by a home location register (HLR) or a home subscriber server (HSS) 415, to a visitor location register (VLR) 411A. The MAP-PSI message 416 may comprise a request for a location of a subscriber.

When the MAP-PSI message 416 is received by VLR 411A, the VLR 411A may send a request to page 417 an user equipment (UE) 400 of the subscriber to a mobile switching center server MSS 431A. In turn, the MSS 431A may send a paging message 422 to UE 400.

Since the UE 400 may be located in a location area not controlled by VLR 411A/MSS 431A but in a location area controlled by VLR/MSS 411B, UE 400 may initiate a location update procedure towards VLR/MSS 411B. It may be noted that in figure 4a, VLR/MSS 411B is denoted as a single entity for convenience. If the VLR and MSS are different entities, there may be communication between them over a B interface defined by 3GPP. In order to initiate the location update procedure, UE 400 may send a location update request 428 to VLR/MSS 411B. Upon receipt of the location update request 428 from UE 400, VLR/MSS 411B may perform a update location procedure 430 with HLR 415 over a D interface. During the update location procedure 430, HLR 415 may update the subscriber records to indicate that the subscriber is served by VLR/MSS 411B. In addition, HLR 415 may provide subscriber data to VLR/MSS 411B. VLR/MSS 411B may subsequently send a location update accept message 436 to UE 400.

Upon receiving the update location request 430 from VLR/MSS 411B, HLR 415 may send a MAP-Cancel Location request 432 to VLR 411A. Such a MAP-Cancel Location request 432 may comprise an indication that the subscriber is not controlled by the VLR 411A. Upon receipt of the MAP-Cancel Location request 432 from HLR 415, VLR 411A may send an error response 434 for the MAP-PSI message 416 to HLR 415.

Subsequent to this, HLR 415 may re-transmit the MAP-PSI message 438 towards VLR/MSS 411B. VLR/MSS 411B may send a response message 444 for the re-transmitted MAP-PSI message 438 to HLR 415. Such response message 444 may comprise the location information of the UE 400.

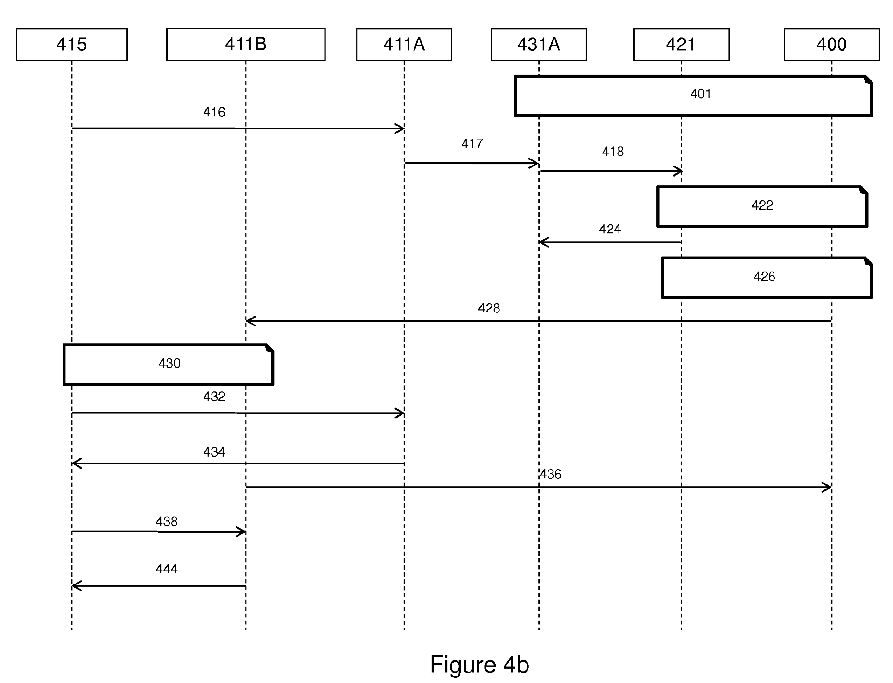

Figure 4b illustrates a procedure, according to an example of the present invention, for handling a request for location of a subscriber in a CS network, wherein the subscriber may be attached to a IP based network, e.g., E-UTRAN network. An user equipment 400 of the subscriber may be registered 401 to both the E-UTRAN network and the CS network. Such user equipment 400 may be capable of CSFB procedures when attached to an E-UTRAN network. The procedure is similar to the one described in connection with figure 4a; however, since the subscriber may be attached to the E-UTRAN network, the subscriber may be required to attach to the CS network before the location of the subscriber in CS network could be provided. Thus, when a request to page 417 the user equipment 400 is received from VLR 411A, the MSS 431A may transmit a paging request 418 to a mobility management entity 421, that is part of a evolved packet core (EPC) network, over a SGs interface defined by 3GPP.

The MME 421 may perform a paging 422 of the UE 400 if the UE is idle. Alternatively, if UE 400 is in an active session in EPS network, MME 421 may perform a notification 422 towards the UE 400. Upon receipt of a response for the paging or notification 422, the MME 421 may transmit a service request 424 to MSS 431A, indicating that the UE 400 is found. Further, MME 421 may initiate a CS Fallback (CSFB) procedure 426 towards the UE 400.

Subsequent to CS fall back (CSFB) 426, a location update procedure may be performed by the UE 400. The location update request 428 transmitted by the UE 400 may comprise a flag indicating a mobile terminated event in CS network. The subsequent procedures comprising the update location 430 towards HLR 415 and HLR retransmitting the MAP-PSI request towards VLR/MSS 411B etc are similar to those described in connection with figure 4a.

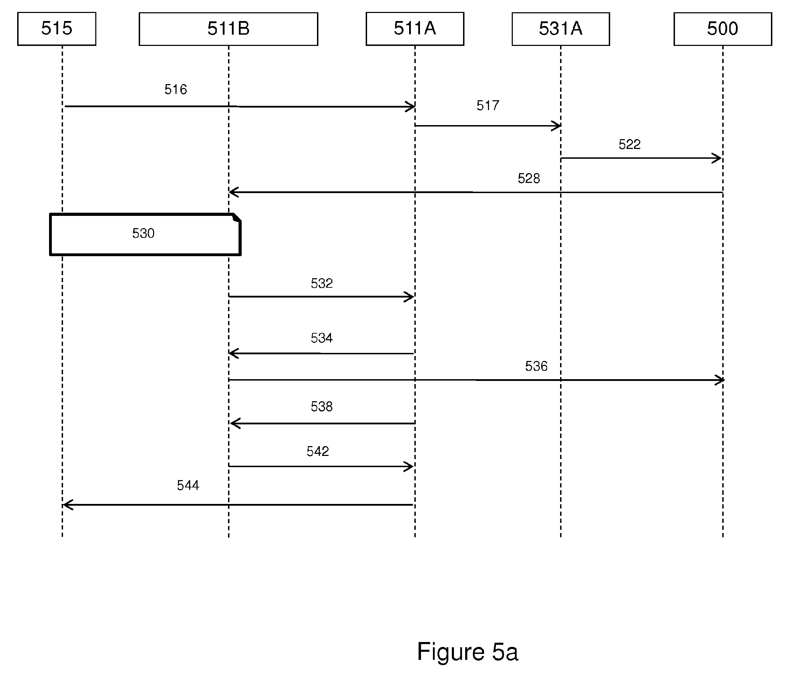

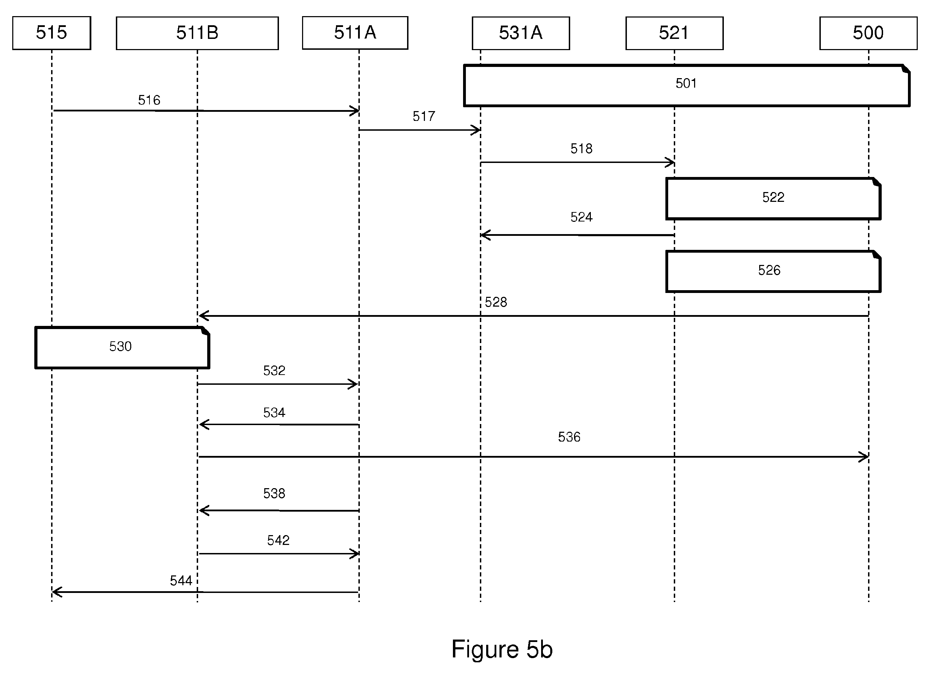

Figure 5a and 5b illustrate alternative examples, according to the present invention, by which MAP-PSI requests for location of a subscriber in a CS network may be handled in scenarios wherein the subscriber may be located in a location area not controlled by a VLR/MSS receiving the MAP-PSI request.

Referring to figure 5a, a MAP-PSI message 516 may be transmitted by a home location register (HLR) or a home subscriber server (HSS) 515, to a visitor location register (VLR) 511A. The MAP-PSI message 516 may comprise a request for a location of a subscriber in a CS network.

When the MAP-PSI message 516 is received by VLR 511A, the VLR 511A may send a request to page 517 an user equipment 500 of the subscriber to a mobile switching center server MSS 531A. In turn, the MSS 531A may send a paging message 522 to UE 500.

Since the UE 500 may be located in a location area not controlled by VLR 511A/MSS 531A but in a location area controlled by another VLR/MSS 511B, UE 500 may initiate a location update procedure towards VLR/MSS 511B. It may be noted that in figure 5a, VLR/MSS 511B is denoted as a single entity for convenience. If the VLR and MSS are different entities, there may be communication between them over a B interface defined by 3GPP. In order to initiate the location update procedure, UE 500 may send a location update request 528 to VLR/MSS 511B. Upon receipt of the location update request 528 from UE 500, VLR/MSS 511B may perform a update location procedure 530 with HLR 515 over a D interface. During the update location procedure 530, HLR 515 may update the subscriber records to indicate that the subscriber is served by VLR/MSS 511B. In addition, HLR 515 may provide subscriber data to VLR/MSS 511B.

In order to complete the location update procedure, VLR/MSS 511B may need an identification of the subscriber. For this, VLR/MSS 511B may send a MAP request 532 over G interface to VLR 511A requesting an identity of the subscriber, e.g., international mobile subscriber identity (IMSI). The VLR 511A may send the identity of the subscriber in a response message 534 to VLR/MSS 511B. VLR/MSS 511B may subsequently send a location update accept message 536 to UE 400.

After providing the identity of the subscriber to VLR/MSS 511B, VLR 511A may transmit a forwarded MAP-PSI message 538 to VLR/MSS 511B. The forwarded MAP-PSI message 538 may comprise the request for location of the subscriber as in the MAP-PSI message 516. The VLR/MSS 511B may send a response message 542 for the forwarded MAP-PSI message 538 to VLR 511A. Such response message 542 may comprise the location of the subscriber in CS network. Subsequent to receiving the response message 542, the VLR 511A may transmit a response 544 for the MAP-PSI message 516 to HLR 515.

Figure 5b illustrates a procedure similar to one described with reference to figure 5a, wherein the subscriber may be attached to a IP based network, e.g., E-UTRAN network. In this case, the user equipment 500 of the subscriber may be registered 501 to both the E-UTRAN network and the CS network. Such user equipment 500 may be capable of CSFB procedures when attached to an E-UTRAN network. The procedure is similar to the one described in connection with figure 4a; however, since the subscriber may be attached to the E-UTRAN network, the subscriber may be required to attach to the CS network before the location of the subscriber in CS network could be provided. Thus, when a request to page 517 the user equipment 500 is received from VLR 511A, the MSS 531A may transmit a paging request 518 to a mobility management entity 521, that is part of a evolved packet core (EPC) network, over a SGs interface defined by 3GPP.

The MME 521 may perform a paging 522 of the UE 500 if the UE is idle. Alternatively, if UE 500 is in an active session in EPS network, MME 521 may perform a notification 522 towards the UE 500. Upon receipt of a response for the paging or notification 522, the MME 521 may transmit a service request 524 to MSS 531A, indicating that the UE 500 is found. Further, MME 521 may initiate a CS Fallback (CSFB) procedure 526 towards the UE 500.

Subsequent to CS fall back (CSFB) 526, a location update procedure may be performed by the UE 500. The location update request 528 transmitted by the UE 500 may comprise a flag indicating a mobile terminated event in CS network. The subsequent procedures comprising the update location 530 towards HLR 515 and VLR 511A forwarding the MAP-PSI request 538 towards VLR/MSS 511B etc are similar to those described in connection with figure 5a.

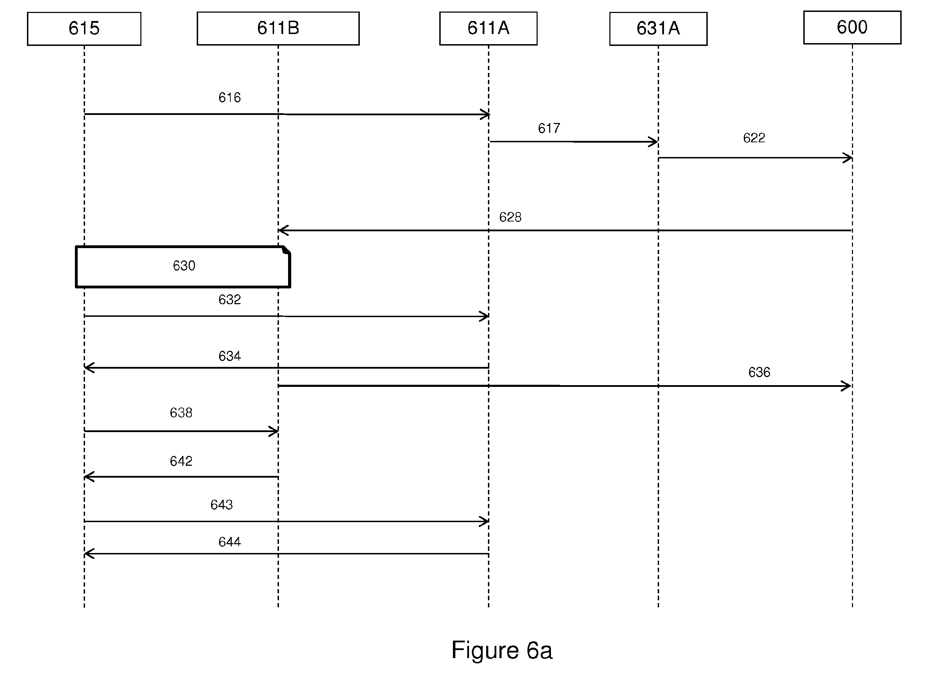

Figure 6a illustrates yet another procedure, according to examples of the present invention, for handling requests for location of a subscriber, for example a MAP-PSI message.

A MAP-PSI message 616 may be transmitted by a home location register (HLR) or a home subscriber server (HSS) 615, to a visitor location register (VLR) 611A. The MAP-PSI message 616 may comprise a request for a location of a subscriber.

When the MAP-PSI message 616 is received by VLR 611A, the VLR 611A may send a request to page 617 an user equipment (UE) 600 of the subscriber to a mobile switching center server (MSS) 631A. In turn, the MSS 631A may send a paging message 622 to UE 600.

Since the UE 600 may be located in a location area not controlled by VLR 611A/MSS 631A but in a location area controlled by VLR/MSS 611B, UE 600 may initiate a location update procedure towards VLR/MSS 611B. It may be noted that in figure 4a, VLR/MSS 611B is denoted as a single entity for convenience. If the VLR and MSS are different entities, there may be communication between them over a B interface defined by 3GPP. In order to initiate the location update procedure, UE 600 may send a location update request 628 to VLR/MSS 611B. Upon receipt of the location update request 628 from UE 600, VLR/MSS 611B may perform a update location procedure 630 with HLR 615 over a D interface. During the update location procedure 630, HLR 615 may update the subscriber records to indicate that the subscriber is served by VLR/MSS 611B. In addition, HLR 615 may provide subscriber data to VLR/MSS 611B. VLR/MSS 611B may subsequently send a location update accept message 636 to UE 600.

During the update location procedure 630, HLR 615 may send a MAP-Cancel Location request 632 to VLR 611A. Such a MAP-Cancel Location request 632 may comprise an indication that the subscriber is not controlled by the VLR 611A. Upon receipt of the MAP-Cancel Location request 632 from HLR 615, VLR 611A may send a MAP-AnyTimeInterrogation (ATI) message 634, defined by 3GPP, to HLR 615. Such MAP-ATI message 634 may comprise a request for location of the subscriber.

Such a MAP-ATI message 634 may trigger HLR 615 to transmit a MAP-PSI message 638 towards VLR/MSS 611B, requesting for location of the subscriber. VLR/MSS 611B may send a response message 642 for the MAP-PSI message 638 to HLR 615. Such response message 642 may comprise the location information of the subscriber. Subsequently, HLR 615 may send a MAP-ATI response 643 comprising the location of the subscriber to VLR 611A, which may transmit a MAP-PSI response 644 comprising the location of the subscriber to HLR 615.

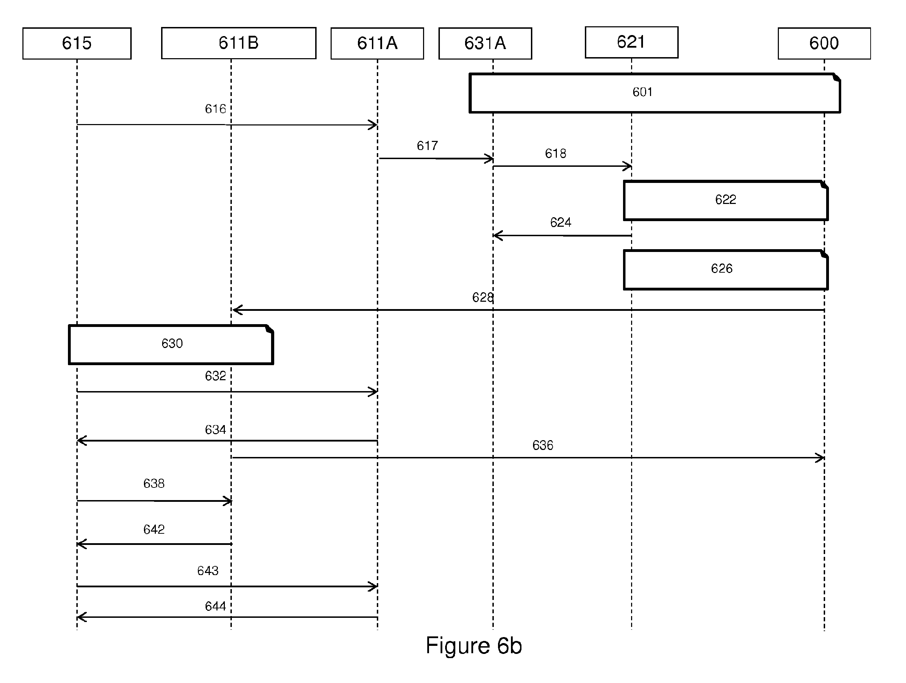

Figure 6b illustrates yet another procedure, similar to the one described in reference to figure 6a, wherein the subscriber may be attached to a IP based network, e.g., E-UTRAN network. An user equipment 600 of the subscriber may be registered 601 to both the E-UTRAN network and the CS network. Such user equipment 600 may be capable of CSFB procedures when attached to an E-UTRAN network. Since the subscriber may be attached to the E-UTRAN network, the subscriber may be required to attach to the CS network before the location of the subscriber in CS network could be provided. Thus, when a request to page 617 the user equipment 600 is received from VLR 611A, the MSS 631A may transmit a paging request 618 to a mobility management entity 621, that is part of a evolved packet core (EPC) network, over a SGs interface defined by 3GPP.

The MME 621 may perform a paging 622 of the UE 600 if the UE is idle. Alternatively, if UE 600 is in an active session in EPS network, MME 621 may perform a notification 622 towards the UE 600. Upon receipt of a response for the paging or notification 622, the MME 621 may transmit a service request 624 to MSS 631A, indicating that the UE 600 is found. Further, MME 621 may initiate a CS Fallback (CSFB) procedure 626 towards the UE 600.

Subsequent to CS fall back (CSFB) 626, a location update procedure may be performed by the UE 600. The location update request 628 transmitted by the UE 600 may comprise a flag indicating a mobile terminated (MT) event in CS network. The subsequent procedures comprising the update location 630 towards HLR 615 and HLR transmitting a MAP-PSI request towards VLR/MSS 611B etc are similar to those described in connection with figure 6a.

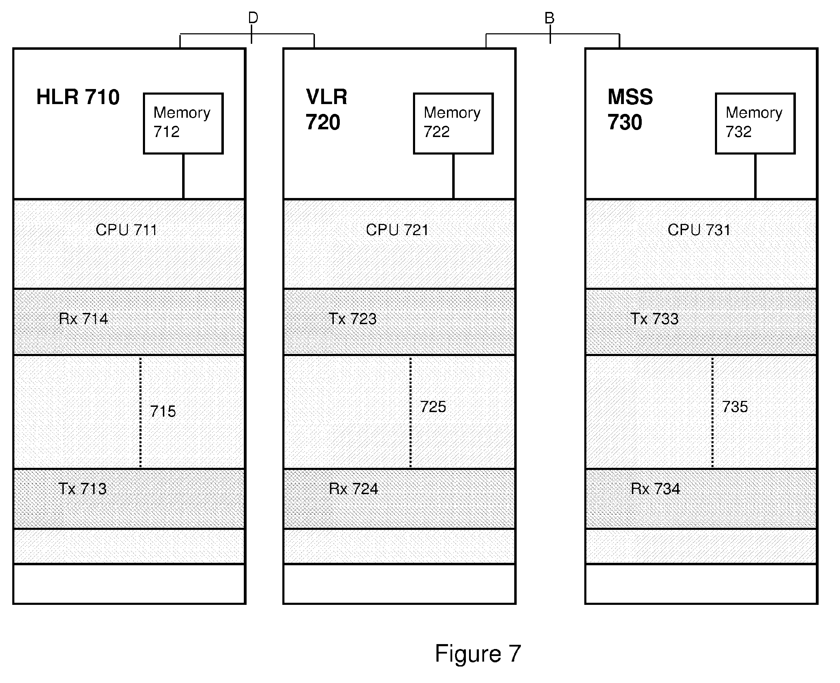

The present invention provides a system for handling requests for location of a subscriber in a network. Such requests may be MAP-PSI messages. According to some examples of the present invention, the requests may be for location of the subscriber in a first network, wherein the subscriber may be attached to a second network. Further, the subscriber may be registered in the first network and the second network. As examples, the first network may be a General Packet Radio Service (GPRS) network comprising a GERAN access network, or a Universal Mobile Telecommunications System (UMTS) comprising a UTRAN access network. The second network may be an Evolved Packet System (EPS) comprising a LTE or E-UTRAN access network. An example of a system, according to the present invention, is illustrated in figure 7. The system 700 may comprise:
- a first apparatus 710;
- a second apparatus 720; and
- a third apparatus 730.

The first apparatus 710 may be a home location register (HLR). The second apparatus may be a visitor location register (VLR). This apparatus may be a mobile switching center server (MSS). The first apparatus and the second apparatus 720 may exchange messages over a D interface defined by 3GPP. Similarly, the second apparatus and the third apparatus may exchange messages over a B interface defined by 3GPP. According to examples of the present invention, it may be possible that the second and third apparatuses may be co-located with a internal B interface, or may be separate entities with an external B interface.

The first apparatus (HLR) 710 in accordance with the present invention may provide a subscriber repository, such as a home location register (HLR) or a home subscriber server (HSS), enhanced with the features of the invention. The apparatus 710 may comprise a Central Processing Unit (CPU or a core functionality) 711, a memory 712, a means for receiving Rx 714 and a means for transmitting Tx 713. The means for receiving 714 and means for transmitting 713 may exchange information over an internal interface 715.

The means for receiving Rx 714 and the means for transmitting 713 of the apparatus 710 may be functionalities running on the CPU 711 of the apparatus, or may alternatively be separate functional entities or means.

The CPU 711 may be configured to process various data inputs and to control the functions of the memory 712, the means for receiving 714 and the means for transmitting 713. The memory 712 may serve e.g. for storing code means for carrying out e.g. the methods according to the examples of the present invention, when run e.g. on the CPU 711. The memory 712 may, according to examples of the present invention, store subscriber data that may comprise the addresses of a mobile switching center and/or a visitor location register in a GPRS/UMTS network and a mobility management entity in an EPS system that may serve the subscriber.

It may be noted that the means for receiving 714 and the means for transmitting 713 may alternatively be provided as integral transceivers. It may further be noted that the means for receiving 714 and the means for transmitting 713 may be implemented i) as physical transmitters/receivers for transceiving e.g. via the air interface, ii) as routing entities e.g. for sending/receiving data packets e.g. in a PS (packet switched) network, or, iii) as any suitable combination of i) and ii).

The means for receiving 714, according to examples of the present invention, may receive requests for a location of a subscriber in a CS network such as a GPRS or UMTS network. It may be noted that the subscriber may be attached to an Evolved Packet System (EPS) network, but may simultaneously be registered to a CS network. Example of such requests for location of the subscriber may be mobile application part (MAP) - Anytime Interrogation (ATI) messages and may be received from a Service Control Function (SCF), such as a gsmSCF. Upon receipt of, for example, a MAP-ATI message requesting a subscriber information, the means for receiving 714 may trigger the means for transmitting 713 (over interface 715) to transmit a request for the subscriber information to a visitor location register (VLR). The means for transmitting 715 may transmit over a D interface a MAP-Provide-Subscriber-Info (PSI) message requesting the location of the subscriber to a first VLR chosen based on the address stored in the memory 712. The means for receiving 714 may receive a request to update a record of the subscriber from a second VLR, which may be the VLR serving the subscriber. Such request to update the record of the subscriber may be a MAP-Update Location request, defined by 3GPP. The means for transmitting 713 may transmit a response to the MAP-Update Location request. The means for transmitting 713 may also transmit a message to the first VLR to delete a record of the subscriber which the first VLR may have stored. Such a request to the first VLR may be a MAP-Cancel-Location request, defined by 3GPP. The means for receiving 714 may receive an error response from the first VLR for the MAP-PSI message requesting the location of the subscriber in CS network.

According to examples of the present invention, the means for transmitting may re-transmit the MAP-PSI request for location of the subscriber in CS network to the second VLR. The means for receiving 714 may receive a response for the re-transmitted MAP-PSI message from the second VLR and the means for transmitting 713 may transmit a response to the MAP-ATI message to the service control function.

Figure 7 shows an example of a second apparatus (VLR) 720 in accordance with the present invention. The second apparatus may provide a visitor location register (VLR) enhanced with the features of the invention. A second apparatus 720, in accordance with the present invention, may exchange messages with another second apparatus over a G interface defined by 3GPP. Further, a second apparatus 720, according to the present invention, may exchange messages with a mobile switching centre server (MSS) over a B interface defined by 3GPP.

The apparatus 720 may comprise a Central Processing Unit (CPU or a core functionality) 721, a memory 722, a means for receiving Rx 724 and a means for transmitting Tx 723. The means for receiving 724 and means for transmitting 723 may exchange information over an internal interface 725.

The means for receiving Rx 724 and the means for transmitting 723 of the apparatus 720 may be functionalities running on the CPU 721 of the apparatus, or may alternatively be separate functional entities or means.

The CPU 721 may be configured to process various data inputs and to control the functions of the memory 722, the means for receiving 724 and the means for transmitting 723. The memory 722 may serve e.g. for storing code means for carrying out e.g. the methods according to the examples of the present invention, when run e.g. on the CPU 721. The memory 722 may, according to examples of the present invention, store subscriber data when the subscriber may be served by the apparatus.

It may be noted that the means for receiving 724 and the means for transmitting 723 may alternatively be provided as integral transceivers. It may further be noted that the means for receiving 724 and the means for transmitting 723 may be implemented i) as physical transmitters/receivers for transceiving e.g. via the air interface, ii) as routing entities e.g. for sending/receiving data packets e.g. in a PS (packet switched) network, or, iii) as any suitable combination of i) and ii).

The means for receiving 724, according to examples of the present invention, may receive requests for a location of a subscriber in a CS network, e.g., GPRS or UMTS network. The subscriber, according to examples of present invention, may be registered to both the CS network and to an EPS network. Further, the subscriber may be attached to the EPS network. An example of such requests is a mobile application part (MAP) - Provide-Subscriber-Info (MAP-PSI) message as defined by 3GPP. The MAP-PSI message, according to some examples of the present invention, may be received from a home location register (HLR) over a D interface.

Upon receipt of, for example, a MAP-PSI message requesting location of the subscriber, the means for receiving 724 may trigger the means for transmitting 723 (over interface 725) to transmit a request to page the subscriber to a mobile switching center server (MSS) in the CS network.

According to examples of the present invention, the subscriber may be located in a location area not controlled by the second apparatus 720. In such a case, according to a first example of the present invention, the means for receiving 724 may receive a request for an identification of the subscriber from a visitor location register (VLR) that controls the location area where the subscriber may be located. The means for transmitting 723 may transmit a response for this request for identification of the subscriber. Subsequent to this, the means for transmitting 723 may forward the MAP-PSI request for location of the subscriber to the VLR. The means for receiving 724 may receive a response for the forwarded MAP-PSI request from the VLR. The response may comprise the location information of the subscriber. The means for transmitting 723 may transmit a response to the MAP-PSI message to the HLR.

According to a second example of the present invention, when a subscriber may be located in a location area not controlled by the second apparatus, the means for receiving 724 may receive a message from the home location register (HLR) indicating that the subscriber is not controlled by the second apparatus. Such a message may be a MAP-Cancel Location request. Upon receipt of this message, the means for transmitting 723 may transmit a MAP-AnyTimeInterrogation (ATI) message requesting the location of the subscriber to HLR. As response to this, the means for receiving 724 may receive from the HLR a MAP-ATI response comprising the location of the subscriber. Subsequent to this, the means for transmitting 723 may transmit a response for the MAP-PSI message to HLR.

Figure 7 shows an example of a third apparatus (MSS) 730 in accordance with the present invention. The third apparatus may provide a mobile switching center server (MSS) enhanced with the features of the invention. A third apparatus 720, in accordance with the present invention, may exchange messages with a visitor location register (VLR) over a B interface defined by 3GPP. Further, the third apparatus may exchange messages with a control node, for example a mobility management entity, in a IP based network such as a evolved packet system (EPS) network, over a SGs interface defined by 3GPP.

The apparatus 730 may comprise a Central Processing Unit (CPU or a core functionality) 731, a memory 732, a means for receiving Rx 734 and a means for transmitting Tx 733. The means for receiving 734 and means for transmitting 733 may exchange information over an internal interface 735.

The means for receiving Rx 734 and the means for transmitting 733 of the apparatus 730 may be functionalities running on the CPU 731 of the apparatus, or may alternatively be separate functional entities or means.

The CPU 731 may be configured to process various data inputs and to control the functions of the memory 732, the means for receiving 734 and the means for transmitting 733. The memory 732 may serve e.g. for storing code means for carrying out e.g. the methods according to the examples of the present invention, when run e.g. on the CPU 731. The memory 732 may, according to examples of the present invention, store an address of a control node such a mobility management entity of a evolved packet system (EPS) network.

It may be noted that the means for receiving 734 and the means for transmitting 733 may alternatively be provided as integral transceivers. It may further be noted that the means for receiving 734 and the means for transmitting 733 may be implemented i) as physical transmitters/receivers for transceiving e.g. via the air interface, ii) as routing entities e.g. for sending/receiving data packets e.g. in a PS (packet switched) network, or, iii) as any suitable combination of i) and ii).

The means for receiving 734 may receive a request to page a subscriber from a VLR. The subscriber may be attached to an IP based network such as an evolved packet system (EPS) and registered also to the CS network of which the third apparatus 730 may be part of. In such a scenario, the third apparatus may not be able to page the subscriber directly. Thus, the means for transmitting may transmit a paging request to a control node, for example a mobility management entity (MME) in the EPS network over a SGs interface. The means for receiving 624 may receive a response for the paging request over the SGs interface from MME that may comprise an indication that the user equipment of the subscriber was found. Additionally, the means for receiving may receive a response for the paging request from the user equipment after being attached to the CS network. If the location area of the subscriber has changed from the last location update in the CS network, the response from the user equipment may comprise an indication of this. Subsequent to this, the means for transmitting may transmit a response for the request to page the subscriber to VLR. The response may comprise the location of the subscriber in CS network. Alternatively, if the location area had changed from the last location update in CS network, the response may comprise a request to update location of the subscriber.

The present invention may further relate to a computer program product. The computer program product may comprise code means for performing the procedures of handling requests for location of a subscriber, for example, as described with reference to figures 3-6.

Although the present invention has been described herein before with reference to particular examples thereof, the present invention is not limited thereto and various modifications can be made thereto. For example:
- the procedures for handling requests for location of a subscriber described herein may be extended to any request for a subscriber information; and
- the procedures can be extended to situations wherein the subscriber may be attached to any packet switched network and may be registered also to a circuit switched network and requests may relate to a subscriber information in the CS network.

## Claims

1. An apparatus comprising:
means for receiving a first request for a location of a user equipment(100)from a home location register(710);
means for receiving a message from the home location register(710) comprising an indication that the user equipment(100) is not controlled by the apparatus;
means for transmitting a second request for the location of the user equipment(100) to the home location register(710); and
means for receiving a response for the second request from the home location register(710).

2. The apparatus of claim 1 further comprising:
means for transmitting a request to page the user equipment(100).

3. The apparatus of any of claims 1-2, wherein the response to the second request comprises the location of the user equipment(100).

4. The apparatus of any of claims 1-3 further comprises:
means for transmitting a response to the first request, wherein the response comprises the location of the user equipment(100).

5. The apparatus of any of claims 1-4 wherein:
the location of the user equipment(100) comprises a location of the user equipment(100) in a first network; and
the user equipment(100) is attached to a second network.

6. The apparatus of claim 5, wherein the first network comprises a circuit switched, CS, network(110) and the second network comprises an enhanced universal terrestrial radio access network, E-UTRAN, (120).

7. The apparatus of claim 6, wherein the circuit switched network(110) comprises any of:
- a Global System for Mobile Communications, GSM, Enhanced Data rates for Global Evolution, EDGE, Radio Access Network, GERAN; and
- a Universal Terrestrial Radio Access Network, UTRAN.

8. The apparatus of claims 1-7, wherein the apparatus comprises a visitor location register(720).

9. A method comprising:
receiving at a visitor location register(720) a first message requesting a location information of a user equipment(100);
receiving at the visitor location register(720) a second message comprising an indication that the user equipment(100) is not controlled by the visitor location register(720);
transmitting by the visitor location register(720) a third message requesting the location information of the user equipment(100) to a home location register(712); and
receiving a response to the third message from the home location register(712).

10. The method of claim 9 further comprising:
transmitting a request to page the user equipment(100).

11. The method of any of claims 9-10, wherein the response to the third message comprises the location of the user equipment(100).

12. The method of any of claims 9-11 further comprising:
transmitting a response to the first message, wherein the response comprises the location of the user equipment(100).

13. The method of any of claims 9-12 wherein:
the location of the user equipment(100) comprises a location of the user equipment(100) in a first network; and
the user equipment(100) is attached to a second network.

14. The method of claim 13, wherein the first network comprises a circuit switched, CS, network(110) and the second network comprises an enhanced universal terrestrial radio access network, E-UTRAN, (120).

15. The method of claim 14, wherein the circuit switched network(110) comprises any of:
- a Global System for Mobile Communications, GSM, Enhanced Data rates for Global Evolution, EDGE, Radio Access Network, GERAN; and
- a Universal Terrestrial Radio Access Network, UTRAN.

## Patentansprüche

1. Vorrichtung, die Folgendes umfasst:
Mittel zum Empfangen einer ersten Anforderung einer Lokalisierung eines Anwendergeräts (100) von einem Heimlokalisierungsregister (710);
Mittel zum Empfangen einer Nachricht von dem Heimlokalisierungsregister (710), die eine Angabe enthält, dass das Anwendergerät (100) durch die Vorrichtung nicht gesteuert wird;
Mittel zum Senden einer zweiten Anforderung der Lokalisierung und des Anwendergeräts (100) zu dem Heimlokalisierungsregister (710); und
Mittel zum Empfangen einer Antwort auf die zweite Anforderung von dem Heimlokalisierungsregister (710).

2. Vorrichtung nach Anspruch 1, die ferner Folgendes umfasst:
Mittel zum Senden einer Anforderung, um das Anwendergerät (100) durchzublättern.

3. Vorrichtung nach einem der Ansprüche 1-2, wobei die Antwort auf die zweite Anforderung die Lokalisierung des Anwendergeräts (100) umfasst.

4. Vorrichtung nach einem der Ansprüche 1-3, die ferner Folgendes umfasst:
Mittel zum Senden einer Antwort auf die erste Anforderung, wobei die Antwort die Lokalisierung des Anwendergeräts (100) enthält.

5. Vorrichtung nach einem der Ansprüche 1-4, wobei:
die Lokalisierung des Anwendergeräts (100) eine Lokalisierung des Anwendergeräts (100) in einem ersten Netz enthält; und
das Anwendergerät (100) in einem zweiten Netz angeschlossen ist.

6. Vorrichtung nach Anspruch 5, wobei das erste Netz ein schaltungsvermitteltes Netz, CS-Netz, (110) ist und das zweite Netz ein universelles terrestrisches Funkzugriffsnetz, E-UTRAN, (120) umfasst.

7. Vorrichtung nach Anspruch 6, wobei das schaltungsvermittelte Netz (110) irgendeines der Folgenden umfasst:
- ein Funkzugriffsnetz, GERAN, des Globalen Systems für Mobilkommunikation, GSM, mit verbesserten Datenraten für Globale Entwicklung, EDGE; und
- ein universelles terrestrisches Funkzugriffsnetz, UTRAN.

8. Vorrichtung nach den Ansprüchen 1-7, wobei die Vorrichtung ein Besucherlokalisierungsregister (720) umfasst.

9. Verfahren, das Folgendes umfasst:
Empfangen bei einem Besucherlokalisierungsregister (720) einer ersten Nachricht, die Lokalisierungsinformationen eines Anwendergeräts (100) anfordert;
Empfangen bei dem Besucherlokalisierungsregister (720) einer zweiten Nachricht, die eine Angabe enthält, dass das Anwendergerät (100) nicht durch das Besucherlokalisierungsregister (720) gesteuert wird;
Senden durch das Besucherlokalisierungsregister (720) einer dritten Nachricht, die die Lokalisierungsinformationen des Anwendergeräts (100) anfordert, zu einem Heimlokalisierungsregister (712), und
Empfangen einer Antwort auf die dritte Nachricht von dem Heimlokalisierungsregister (712).

10. Verfahren nach Anspruch 9, das ferner Folgendes umfasst:
Senden einer Anforderung, um durch das Anwendergerät (100) zu blättern.

11. Verfahren nach einem der Ansprüche 9-10, wobei die Antwort auf die dritte Nachricht die Lokalisierung des Anwendergeräts (100) enthält.

12. Verfahren nach einem der Ansprüche 9-11, das ferner Folgendes umfasst:
Senden einer Antwort auf die erste Nachricht, wobei die Antwort die Lokalisierung des Anwendergeräts (100) enthält.

13. Verfahren nach einem der Ansprüche 9-12, wobei:
die Lokalisierung des Anwendergeräts (100) eine Lokalisierung des Anwendergeräts (100) in einem ersten Netz umfasst; und
das Anwendergerät (100) an ein zweites Netz angeschlossen ist.

14. Verfahren nach Anspruch 13, wobei das erste Netz ein schaltungsvermitteltes Netz, CS-Netz, (110) enthält und das zweite Netz ein verbessertes universelles terrestrisches Funkzugriffsnetz, E-UTRAN, (120) enthält.

15. Verfahren nach Anspruch 14, wobei das schaltungsvermittelte Netz (110) eines der Folgenden umfasst:
- ein Funkzugriffsnetz, GERAN, des Globalen Systems für Mobilkommunikation, GSM, mit verbesserten Datenraten für Globale Entwicklung, EDGE; und
- ein universelles terrestrisches Funkzugriffsnetz, UTRAN.

## Revendications

1. Un appareil comprenant :
un moyen de réception d'une première demande pour un emplacement d'un équipement d'utilisateur (100) à partir d'un registre de position de rattachement (710),
un moyen de réception d'un message à partir du registre de position de rattachement (710) contenant une indication selon laquelle l'équipement d'utilisateur (100) n'est pas commandé par l'appareil,
un moyen de transmission d'une deuxième demande pour l'emplacement de l'équipement d'utilisateur (100) au registre de position de rattachement (710), et
un moyen de réception d'une réponse à la deuxième demande à partir du registre de position de rattachement (710).

2. L'appareil selon la revendication 1 comprenant en outre :
un moyen de transmission d'une demande d'appel par radiomessagerie de l'équipement d'utilisateur (100).

3. L'appareil selon l'une quelconque des revendications 1 à 2, dans lequel la réponse à la deuxième demande contient l'emplacement de l'équipement d'utilisateur (100).

4. L'appareil selon l'une quelconque des revendications 1 à 3 comprenant en outre :
un moyen de transmission d'une réponse à la première demande, la réponse contenant l'emplacement de l'équipement d'utilisateur (100).

5. L'appareil selon l'une quelconque des revendications 1 à 4 dans lequel :
l'emplacement de l'équipement d'utilisateur (100) comprend un emplacement de l'équipement d'utilisateur (100) dans un premier réseau, et
l'équipement d'utilisateur (100) est rattaché à un deuxième réseau.

6. L'appareil selon la revendication 5, dans lequel le premier réseau comprend un réseau à commutation de circuits, CS, (110) et le deuxième réseau comprend un réseau d'accès radioélectrique terrestre universel amélioré, E-UTRAN, (120).

7. L'appareil selon la revendication 6, dans lequel le réseau à commutation de circuits (110) comprend un réseau quelconque parmi :
- un réseau d'accès radio GERAN, de système mondial de communications mobiles, GSM, à débits binaires améliorés, EDGE, et
- un réseau d'accès radioélectrique terrestre universel, UTRAN.

8. L'appareil selon les revendications 1 à 7, dans lequel l'appareil comprend un registre de localisation de visiteurs (720).

9. Un procédé comprenant :
la réception, au niveau d'un registre de localisation de visiteurs(720), d'un premier message demandant des informations de localisation d'un équipement d'utilisateur (100),
la réception, au niveau du registre de localisation de visiteurs(720), d'un deuxième message contenant une indication selon laquelle l'équipement d'utilisateur (100) n'est pas commandé par le registre de localisation de visiteurs(720),
la transmission, par le registre de localisation de visiteurs(720), d'un troisième message demandant des informations de localisation de l'équipement d'utilisateur (100) à un registre de position de rattachement (712), et la réception d'une réponse au troisième message à partir du registre de position de rattachement (712).

10. Le procédé selon la revendication 9 comprenant en outre :
la transmission d'une demande d'appel par radiomessagerie de l'équipement d'utilisateur (100).

11. Le procédé selon l'une quelconque des revendications 9 à 10, dans lequel la réponse au troisième message contient l'emplacement de l'équipement d'utilisateur (100).

12. Le procédé selon l'une quelconque des revendications 9 à 11 comprenant en outre :
la transmission d'une réponse au premier message, la réponse contenant l'emplacement de l'équipement d'utilisateur (100).

13. Le procédé selon l'une quelconque des revendications 9 à 12 dans lequel :
l'emplacement de l'équipement d'utilisateur (100) comprend un emplacement de l'équipement d'utilisateur (100) dans un premier réseau, et
l'équipement d'utilisateur (100) est rattaché à un deuxième réseau.

14. Le procédé selon la revendication 13, dans lequel le premier réseau comprend un réseau à commutation de circuits, CS, (110) et le deuxième réseau comprend un réseau d'accès radioélectrique terrestre universel, E-UTRAN (120).

15. Le procédé selon la revendication 14, dans lequel le réseau à commutation de circuits (110) comprend un réseau quelconque parmi :
- un réseau d'accès radio GERAN, de système mondial de communications mobiles, GSM, à débits binaires améliorés, EDGE, et
- un réseau d'accès radioélectrique terrestre universel, UTRAN.
